# EUROPEAN PATENT SPECIFICATION

(11) **EP 2 778 354 B1**
(45) Date of publication and mention of the grant of the patent: **13.05.2020**
(21) Application number: 13192905.1
(22) Date of filing: 14.11.2013
(51) Int. Cl.: F01K 17/02, F01K 13/02

(54) **Variable heat/power ratio cogeneration system**
Kogenerationssystem mit variablem Wärme-/Leistungsverhältnis
Système de cogénération de rapport de chaleur/puissance variable

(30) Priority: 12.03.2013 JP 2013049501
(43) Date of publication of application: 17.09.2014
(73) Proprietor: Mitsubishi Hitachi Power Systems, Ltd., Yokohama 220-8401 (JP)
(72) Inventor: Koganezawa, Tomomi, Tokyo, 100-8280 (JP); Abe, Kazuki, Tokyo, 100-8280 (JP)
(74) Representative: MERH-IP Matias Erny Reichl Hoffmann Patentanwälte PartG mbB

(56) References cited:
- EP-A1- 0 622 535
- WO-A1-94/09321
- WO-A1-98/38414
- JP-A- 2006 317 061
- JP-A- 2010 230 287
- GERICKE B ET AL: "BIOMASSENVERSTROMUNG DURCH VERGASUNG UND INTEGRIERTE GASTURBINENPROZESSE", VGB KRAFTWERKSTECHNIK, VGB KRAFTWERKSTECHNIK GMBH. ESSEN, DE, vol. 74, no. 7, 1 July 1994 (1994-07-01), pages 595-604, XP000457120, ISSN: 0372-5715

## Description

### BACKGROUND OF THE INVENTION

### 1. Field of the Invention

The present invention relates to a variable heat/power ratio cogeneration system.

### 2. Description of the Related Art

A variable heat/power cogeneration system is expected as a low-energy-loss high-efficiency distributed power supply since it can supply heat and electricity and change a heat-to-power ratio on the basis of a demanded ratio of heat to electricity. Such a variable heat/power cogeneration system has a dual system for steam injection into a combustor in order to prevent an increase in nitrogen oxide (NOx) and unburnt fuel and maintain a low-NOx operation and a high combustion efficiency in an overall load range. This variable heat/power cogeneration system measures the concentrations of NOx and unburnt fuel in exhaust gas, and on the basis of the measured concentrations, controls the flow rate of steam to be injected for each unit of the dual system (refer to, for example, Japanese Patent No. 4386195).

Meanwhile, gas turbines that constitute a part of a variable heat/power cogeneration system are intended to use a variety of fuels. For example, some gas turbines use gas obtained by gasifying coal that is an abundant energy resource, or gas obtained by gasifying biomass that is a carbon-free energy resource. Such gas turbines are adapted to spray, into the combustor, nitrogen separated and generated in a coal gasification plant, thereby reducing NOx emission from a gas turbine combustor that combusts coal gasification gas (refer to, for example, JP-2010-230287-A).

A variable heat/power ratio cogeneration system according to the preamble of claim 1 is shown in EP 0 622 535 A1.

### SUMMARY OF THE INVENTION

If a variable heat/power ratio cogeneration system uses a gasification gas fuel such as coal gasification gas or biomass gasification gas, since the heating value of the gasification gas is smaller than that of normal fuels such as natural gas and light fuel oil, the flow rate of steam that is injected into a part located near a flame zone and is effective to suppress the amount of NOx is relatively low. If steam is injected at a flow rate larger than a rate necessary to reduce the NOx, flame may be blown off. Therefore, the flow rate of steam needs to be controlled in a smaller region with higher accuracy than the case where a conventional normal fuel is used.

In an operation (described in Japanese Patent No. 4386195) of controlling the flow rate of steam on the basis of the exhaust gas composition, since it takes a lot of time to detect the exhaust gas composition, response delay from the detection to control may occur. Therefore, if the gasification gas is used as a fuel in the technique disclosed in Japanese Patent No. 4386195, the operation of controlling the flow rate of the steam may be delayed, the amount of NOx emission and the amount of unburnt fuel emission may increase, and flame may be blown off.

The gas turbine described in JP-2010-230287-A that uses the gasification gas may use a normal fuel such as natural gas or light fuel oil upon start-up and stopping of the gas turbine. Since the gasification gas contains hydrogen and a carbon monoxide (CO), explosion may occur upon ignition and carbon monoxide intoxication upon the stop. To prevent the explosion and the intoxication, the normal fuel is substituted in a fuel pipe upon start-up and stopping of the gas turbine.

In the gas turbine that uses both normal fuel and gasification gas, switching between the normal fuel and the gasification gas may be performed or mixed combustion may occur at the constant ratio of the gasification gas to the normal fuel. If this gas turbine performs the operation (described in Japanese Patent No. 4386195) of controlling the amount of steam on the basis of the exhaust gas composition, the heating value and flow rate of the fuel change. Thus, the flow rate of steam necessary for reducing the NOx changes. Particularly, the fuel switching is completed within a time of several seconds to several tens of seconds. Thus, if the flow rate of the steam is controlled on the basis of the detection (that may be delayed by nearly the same time required for completion of the fuel switching) of the components of the exhaust gas, the control may be delayed, causing an increase in the amount of the NOx discharged and flame to be blown off.

Since the composition of gasification gas easily vary compared with normal fuels, the heating value and the flow rate of the gasification gas significantly vary. Therefore, the flow rate of steam needs to be controlled on the basis of not only the mixed combustion ratio of the flow rate of the gasification gas to that of the normal fuel but also a change in the composition of the gasification gas.

Therefore, if the amount of steam to be consumed is small, a variable heat/power ratio cogeneration system injects extra steam into a combustor to increase the amount of power to be generated, which also aims to suppress the amount of the NOx emission. In this system, a gasification gas fuel such as coal gasification gas or biomass gasification gas is mainly used, whereas a normal fuel such as natural gas or light fuel oil is used for start-up and stop of a gas turbine and used to support combustion. In this case, some measures are required to control the flow rate of steam to be injected into the combustor on the basis of a change in the amount of the fuel to be consumed, a change in the amount of steam to be used, a change in the ratio of the gasification gas to the normal fuel, and a change in the composition of gasification gas.

The invention was devised on the basis of the aforementioned facts, and an object of the invention is to provide a variable heat/power ratio cogeneration system that ensures the stability of combustion in a gas turbine combustor and suppresses NOx emission to the minimum level even when the use ratio of gasification gas to a normal fuel (such as natural gas or light fuel oil) is changed, or the composition of the gasification gas are changed, or the amount of steam to be used is changed.

In order to solve the aforementioned problems, configurations that are described in claims are used. The present application includes multiple schemes for solving the aforementioned problems. As an example of the schemes, a variable heat/power ratio cogeneration system includes a gas turbine that uses both gasification gas obtained by gasifying a solid or liquid fuel and a normal fuel that is natural gas, oil gas, or light fuel oil, the normal fuel being used as an alternative or auxiliary fuel when the gas turbine is start-up and stopped or when the amount of the gasification gas to be supplied is small; a combustor that combusts the gasification gas and the normal fuel to generate combustion gas; a heat recovery steam generator that uses exhaust gas of the gas turbine to generate steam; a process system that supplies the generated steam to a steam consumption facility; and/or a steam system that injects extra steam into the gas turbine. The variable heat/power ratio cogeneration system further includes a first steam system that injects the extra steam on the upstream side of a flame zone with respect to the flow of the combustion gas in the combustor; a second steam system that is branched from the first steam system and injects the extra steam on the downstream side of the flame zone with respect to the flow of the combustion gas in the combustor; a first steam flow rate control valve that is arranged in the first steam system and capable of controlling the flow rate of the steam to be injected by the first steam system; a second steam flow rate control valve that is arranged in the second steam system and capable of controlling the flow rate of the steam to be injected by the second steam system; a gasification gas flow rate detector that detects the flow rate of the gasification gas; a normal fuel flow rate detector that detects the flow rate of the normal fuel; a demanded steam amount detector that detects a demanded amount of steam necessary for the steam consumption facility; and a controller that acquires the flow rate detected by the gasification gas flow rate detector and the flow rate detected by the normal fuel flow rate detector to control the first steam flow rate control valve on the basis of signals indicating the detected flow rates, the controller further acquiring the demanded steam amount detected by the demanded steam amount detector and necessary for the steam consumption facility to control the second steam flow rate control valve on the basis of a signal indicating the demanded steam amount.

According to the invention, even when the use ratio of gasification gas to a normal fuel (such as natural gas or light fuel oil) is changed, or the composition of the gasification gas are changed, or the amount of steam to be used is changed, it is possible to ensure the stability of combustion in a gas turbine combustor and suppress the NOx emission to the minimum level.

### BRIEF DESCRIPTION OF THE DRAWINGS

Fig. 1 is a system flow diagram illustrating an example of the configuration of a variable heat/power ratio cogeneration system according to a first embodiment of the invention.
Fig. 2 is a system flow diagram illustrating another example of the configuration of the variable heat/power ratio cogeneration system according to the first embodiment of the invention and illustrating that a position toward which steam is sprayed is different from the example illustrated in Fig. 1.
Fig. 3 is a system flow diagram illustrating a further example of the configuration of the variable heat/power ratio cogeneration system according to the first embodiment of the invention and illustrating that a position toward which the steam is sprayed is different from the examples illustrated in Figs. 1 and 2.
Fig. 4 is a characteristic diagram illustrating an example of a method for switching fuels in the variable heat/power ratio cogeneration system according to the first embodiment of the invention.
Fig. 5 is a characteristic diagram illustrating an example of a method for mixing the normal fuel with the gasification gas in the variable heat/power ratio cogeneration system according to the first embodiment of the invention.
Fig. 6 is a block diagram illustrating an example of the configuration of a controller included in the variable heat/power ratio cogeneration system according to the first embodiment of the invention.
Figs. 7A to 7C are characteristic diagrams illustrating examples of control of the flow rate of steam in the variable heat/power ratio cogeneration system according to the first embodiment of the invention.
Fig. 8 is a system flow diagram illustrating an example of the configuration of the variable heat/power ratio cogeneration system according to a second embodiment of the invention.

### DESCRIPTION OF PREFERRED EMBODIMENTS

Hereinafter, variable heat/power ratio cogeneration systems according to embodiments of the invention are described with reference to the accompanying drawings.

### First Embodiment

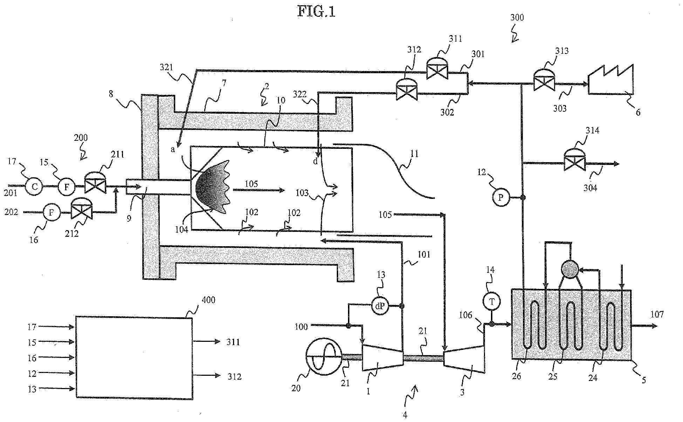

Fig. 1 is a system flow diagram illustrating an example of the configuration of the heat/power ratio cogeneration system according to a first embodiment of the invention. As illustrated in Fig. 1, the heat/power ratio cogeneration system is mainly composed of a gas turbine 4, a heat recovery steam generator 5, a generator 20, and a steam supply system 300.

The gas turbine 4 includes a compressor 1, a combustor 2, and a turbine 3. The compressor 1 compresses air 100 to generate high-pressure compressed air 101 for combustion. The combustor 2 combusts the compressed air 101 introduced from the compressor 1 and a fuel introduced from a fuel system 200 to generate combustion gas 105. The combustion gas 105 generated by the combustor 2 is introduced in the turbine 3. A rotary shaft of the compressor 1 and that of the turbine 3 are coupled to each other by a shaft 21. The generator 20 is driven by the gas turbine 4 and generates power. A rotary shaft of the generator 20 is coupled to the rotary shaft of the compressor 1 and that of the turbine 3 by the shaft 21.

The combustor 2 includes a combustor casing 7, a combustor cover 8, a combustor nozzle 9, a combustor liner 10, and a combustor transition duct 11. The combustor casing 7 constitutes side surfaces of the combustor 2. The combustor cover 8 is arranged at an edge of the combustor casing 7. The combustor nozzle 9 is arranged at a central portion of the combustor cover 8 arranged at the upstream-side edge. The combustor liner 10 is arranged on the downstream side of the combustor nozzle 9 and formed in a substantially cylindrical shape and separates unburnt air from combustion gas. The combustor transition duct 11 is coupled to a downstream-side portion of the combustor liner 10.

The high-pressure compressed air 101 exhausted from the compressor 1 is injected in the combustor casing 7. In the combustor casing 7, the compressed air 101 passes through a substantially annular space formed outside the combustor liner 10, flows toward a head of the combustor 2, and is used for convection cooling of the combustor liner 10.

A part of the compressed air 101 illustrated in Fig. 1 flows as liner cooling air 102 into the combustor liner 10 from a cooling hole formed in the combustor liner 10 and is used for film cooling. Another part of the compressed air 101 flows as dilution air 103 into the combustor liner 10 from a dilution hole formed in the combustor liner 10 and is mixed with combustion gas 105 described later.

The remaining part of the compressed air 101 flows as combustion air 104 into the combustion liner 10 from a combustion hole formed in the combustion liner 10 on the upstream side of the combustion liner 10, is used for combustion together with the fuel sprayed from the combustor nozzle 9 and becomes high-temperature combustion gas 105. The combustion gas 105 is mixed with the liner cooling air 102 and the dilution air 103 and transferred to the turbine 3. Low-pressure gas turbine exhaust 106 is output from the turbine 3, and heat of the gas turbine exhaust 106 is recovered by the heat recovery steam generator 5. After that, the gas turbine exhaust 106 is discharged as exhaust gas 107 into the atmosphere.

The compressor 1 has a pressure ratio detector 13 that detects differential pressure (pressure ratio) between the pressure of the suctioned air and the pressure of air to be discharged. A thermometer 14 for detecting the temperature of the gas turbine exhaust 106 is arranged between the turbine 3 and the heat recovery steam generator 5. Signals detected by the pressure ratio detector 13 and the thermometer 14 are input to a controller 400 described later.

The fuel system 200 of the gas turbine includes a gasification gas fuel system 201 and a normal fuel system 202. A gasification gas fuel of the gasification gas fuel system 201 is a gas fuel generated by gasifying coal or biomass in a gasification furnace (not illustrated) and contains hydrogen and a carbon monoxide as well as a hydrocarbon gas fuel such as methane, ethane, or propane. In addition, the gasification gas fuel contains a carbon dioxide and nitrogen and sometimes a component (such as moisture) with no heating value.

The normal fuel system 202 is provided together with the gasification gas fuel system 201 and supplies a normal fuel such as natural gas, oil gas, or light fuel oil. This is because explosion may occur upon ignition and carbon monoxide intoxication upon the stop since the gasification gas contains hydrogen and a carbon monoxide (CO). Therefore, to prevent the explosion and the carbon monoxide intoxication, the normal fuel is substituted in a fuel pipe upon start-up and stopping of the gas turbine operation of the variable heat/power ratio cogeneration system.

The gasification gas fuel system 201 includes a gasification gas flow rate control valve 211, while the normal fuel system 202 includes a normal fuel flow rate control valve 212. Power output from the gas turbine 4 can be controlled by adjusting the flow rates of the fuels.

The gasification gas fuel system 201 includes a gasification gas flowmeter 15 serving as a fuel flow rate detector and a heating value measurer 17 serving as a heating value detector that detects the heating value of the gasification gas. The normal fuel system 202 includes a normal fuel flowmeter 16 serving as a fuel flow rate detector. Signals that are detected by the detectors are input to the controller 400 (described later).

As the fuel flow rate detectors, opening degrees of the flow rate control valves, opening degree commands to the flow rate control valves, and the like can be used, instead of the fuel flowmeters described in the present embodiment. This is because the fuel flow rates are functions of the opening degrees as long as the pressure of the fuels and the temperatures of the fuels are almost constant. If the pressure and temperature of the gasification gas fuel change, on the other hand, the pressure and temperature of the gasification gas fuel are detected, the flow rates are calculated using the detected pressure and the detected temperature and thus can be detected with high accuracy.

As the heating value detector, a device such as a gas chromatography device which is capable of measuring the composition of the gasification gas may be used to detect the heating value of the gasification gas. It takes about several minutes for the gas chromatography to perform analysis. Thus, if a change in the heating value of the gasification gas over time is small, the gas chromatography is suitable.

A change in the concentration of a specific component, which has a high correlation with a change in the heating value of the gasification gas, may be detected as an easier method. For example, a method for continuously measuring a monocomponent such as hydrogen or methane or a method for continuously measuring moisture contained in the gasification gas by a dew-point meter may be used. According to these methods, the continuous measurement can be easily performed and steam can be controlled even if the heating value of the gasification gas rapidly changes. In addition, if two measurers are used to continuously measure two components, and the heating value of the gasification gas is estimated from the results of the continuous measurements, the two measurers serve as a heating value detector that detects the heating value with higher accuracy than the estimation of the monocomponent. Thus, it is possible to stabilize flame and reduce the NOx.

Next, the steam supply system 300 is described.

The heat recovery steam generator 5 includes a feedwater heater 24, a boiler 25, and a stem heater 26. Steam that is generated and passes through the steam heater 26 is consumed mainly by a steam consumption facility 6. A facility such as a factory that needs a heat source may be used as the steam consumption facility 6. A process steam flow rate control valve 313 is arranged in a pipe of a process steam system 303 provided to supply the steam to the steam consumption facility 6. The process steam flow rate control valve 313 controls the amount of the steam to be transferred. A steam pressure indicator 12 is arranged in a main pipe extending from the heat recovery steam generator 5 and detects the pressure of the steam generated by the heat recovery steam generator 5. A signal indicating the pressure of the steam, detected by the steam pressure indicator 12, is input to the controller 400 described later.

A steam release system 304 is arranged in order to release the steam generated by the heat recovery steam generator 5 into the atmosphere when necessary. A steam release valve 314 is arranged in a pipe of the steam release system 304 and controls the amount of steam to be released.

If the amount of the steam generated by the heat recovery steam generator 5 exceeds the amount of steam necessary for the steam consumption facility 6, the variable heat/power ratio cogeneration system injects extra steam in the combustor 2 to increase output of the generator 20, causing a heat-to-power ratio to be variable.

In the variable heat/power ratio cogeneration system according to the first embodiment of the invention, the steam supply system 300 includes a dual system, i.e., a first steam injection system 301 and a second steam injection system 302. The first steam injection system 301 has a first steam flow rate control valve 311, while the second steam injection system 302 has a second steam flow rate control valve 312. The flow rates of steam of the first and second steam injection systems 301 and 302 can be controlled by the first and second steam flow rate control valves 311 and 312, respectively. The controller 400 described later outputs opening degree commands to the first and second steam flow rate control valves 311 and 312.

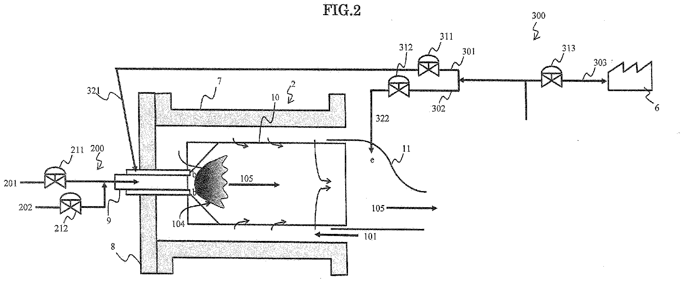

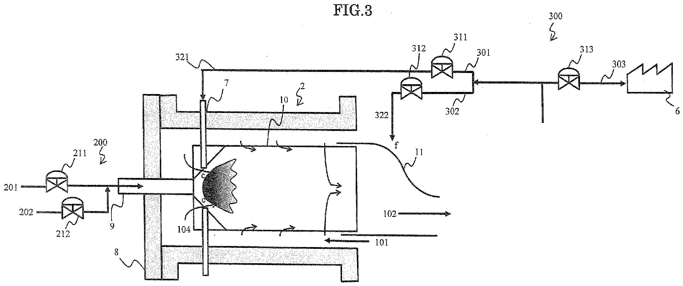

Next, the steam supply system 300 is described with reference to Figs. 1 to 3. Fig. 2 is a system flow diagram illustrating another example of the configuration of the variable heat/power ratio cogeneration system according to the first embodiment of the invention and illustrating that a position toward which the steam is sprayed is different from the example illustrated in Fig. 1. Fig. 3 is a system flow diagram illustrating another example of the configuration of the variable heat/power ratio cogeneration system according to the first embodiment of the invention and illustrating that a position toward which the steam is sprayed is different from the examples illustrated in Figs. 1 and 2. Reference numerals that are illustrated in Figs. 2 and 3 and the same as those illustrated in Fig. 1 indicate the same parts as those illustrated in Fig. 1, and a detailed description thereof is omitted.

First, a first position toward which the first steam injection system 301 sprays the steam is described below.

As illustrated in Fig. 1, the first steam injection system 301 injects first steam 321 to the first position at which most part of the sprayed part is mixed with the combustion air 104 or the fuel on the upstream side of the flame zone with respect to the flow of the combustion gas 105. Specifically, as indicated by a symbol "a" in Fig. 1, the first steam injection system 301 injects the first steam 321 into a space located outside the combustor liner 10 on the upstream side of the flame zone with respect to the flow of the combustion gas 105 and surrounded by the combustor casing 7, the combustor cover 8, and the combustor liner 10.

The combustion air 104 located at the first position is air after the compressor 101 divides the air 101 into the liner cooling air 102, the dilution air 103, and the like. Most part of the combustion air 104 located at the first position is consumed for combustion with the fuel. Thus, the first steam 321 mixed with the combustion air 104 at the first position has an effect to reduce the temperature of the flame zone and significantly contributes to a reduction in the NOx.

As the other example of the first position toward which the first steam 321 is sprayed, the first steam 321 may be sprayed to an outer circumference of the combustor nozzle 9, as indicated by a symbol "b" in Fig. 2. Alternatively, as the other example of the first position toward which the first steam 321 is sprayed, the first steam 321 may be sprayed to a spray hole through which the combustion air 104 flows, as indicated by a symbol "c" in Fig. 3. When the first steam 321 is sprayed to any of the positions described in the examples, the sprayed steam is mixed with the combustion air 104 or the fuel on the upstream side of the flame zone and can reduce the amount of the NOx emission.

When the first steam 321 is sprayed into the space indicated by the symbol "a" in Fig. 1, the length of a steam spray nozzle that protrudes in the combustor 2 can be reduced. This allows not only ensuring the reliability of the steam spray nozzle but also reducing an effect of disturbing the flow of the combustion air 104 to thereby reduce loss of pressure.

When the first steam 321 is sprayed to the outer circumference of the combustor nozzle 9 as indicated by the symbol "b" in Fig. 2, the steam spray nozzle can be formed on the basis of the structure of the combustor nozzle 9 or unified with the combustor nozzle 9. Thus, the length of the steam spray nozzle that protrudes in the combustor 2 can be reduced in the same manner as the first example illustrated in Fig. 1. This allows not only ensuring the reliability of the steam spray nozzle but also reducing the effect of disturbing the flow of the combustion air 104 to thereby reduce loss of pressure. In addition, since the steam can be sprayed to the outer circumference located immediately near the fuel, the mixing with the fuel can be promoted, and the effect of reducing the NOx becomes large.

When the first steam 321 is sprayed to the spray hole as indicated by the symbol "c" in Fig. 3, the steam spray nozzle can be formed on the basis of the structure of the combustor liner 10 or unified with the combustor liner 10. Thus, the length of a steam spray nozzle that protrudes in the combustor 2 can be reduced in the same manner as described above. This allows ensuring the reliability of the steam spray nozzle. In addition, since the steam can be sprayed directly to the combustion hole, the mixing with the combustion air 104 can be promoted and the effect of reducing the NOx becomes large.

Next, a second position toward which the second steam injection system 302 sprays second steam 322 is described.

As illustrated in Fig. 1, the second steam injection system 302 injects the second steam 322 toward the second position at which most part of the steam is mixed with the combustion gas 105 after the combustion on the downstream side of the flame zone with respect to the flow of the combustion gas 105. Specifically, as indicated by a symbol "d" in Fig. 1, the second steam injection system 302 injects the second steam 322 into the combustor liner 10 on the downstream side of the combustor liner 10 with respect to the flow of the combustion gas 105.

Since the sprayed steam is mixed with the combustion gas 105 after the combustion and the dilution air 103 at the second position, the steam does not directly affect the flame zone. Thus, the stability of the combustion is not affected, and the output can be increased by spraying extra steam to the gas turbine combustor 2. In addition, since the second position is located on the upstream side with respect to the turbine 3, the energy of the steam can be effectively converted into power by the turbine 3. When the combustion gas 105 flows into the turbine 3, the combustion gas 105 is mixed with steam and the temperature of the combustion gas 105 is reduced. Thus, when the output is not changed, the temperatures of metal of the combustor transition duct 11 and turbine 3 can be reduced and the reliability and the service life can be improved. In addition, the flow rate of the fuel can be increased by the amount of the mixed steam. If the temperature of the combustion gas 105 within the turbine 3 does not change, the output and the efficiency can be improved by the amount of the mixed steam.

As another example of the second position toward which the second steam 322 is sprayed, the second steam 322 may be sprayed into the combustor transition duct 11, as indicated by a symbol "e" in Fig. 2. As a further example of the second position toward which the second steam 322 is sprayed, the second steam 322 may be sprayed into a space within the casing 7 provided with the combustor transition duct 11, as indicated by a symbol "f" in Fig. 3. When the second steam 322 is sprayed to any of the positions indicated by the symbols "d", "e" and "f", most part of the sprayed second steam 322 is mixed with the combustion gas 105 on the downstream side of the flame zone after the combustion and does not affect the stability of the combustion.

When the second steam 322 is sprayed into the combustor liner 10 indicated by the symbol "d" illustrated in Fig. 1, a steam spray system can extend through the combustor casing 7. Thus, the steam spray system can be more easily assembled and disassembled than the case where the steam spray system is arranged on the side of the combustor transition duct 11 as illustrated in Figs. 2 and 3. In addition, since a distance between the position toward which the second steam 322 is sprayed and an inlet of the turbine 3 is large, the mixing of the second steam 322 with the combustion gas 105 is promoted, and a thermal load to be applied to the turbine 3 is small. Thus, the reliability and service life of the turbine 3 are improved.

If the second steam 322 is sprayed to the position indicated by the symbol "e" in Fig. 2, the position toward which the second steam 322 is sprayed is far from the flame, and an effect on the stability of the combustion can be suppressed to the minimum level.

If the second steam 322 is sprayed to the position indicated by the symbol "f" in Fig. 3, the length of a steam spray nozzle that protrudes in the gas turbine 4 can be reduced. This allows not only ensuring the reliability of the steam spray nozzle but also reducing an effect of disturbing the flow of the compressed air 101 to thereby reduce loss of pressure. In addition, since the length of a space in which the second steam 322 is mixed with the compressed air 101 can be large, thermal stress of a steam spray unit and a temperature deviation at the inlet of the turbine can be small, and the reliability of the overall gas turbine 4 can be improved.

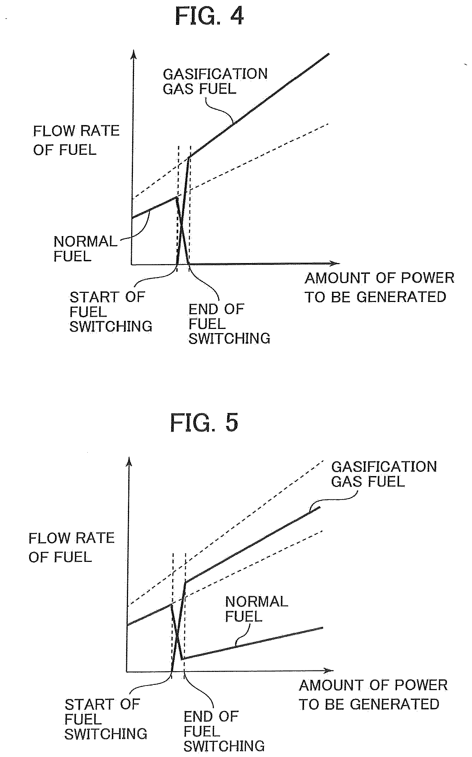

Next, a method for operating the gas turbine of the variable heat/power ratio cogeneration system according to the first embodiment of the invention is described with reference to Figs. 4 and 5. Fig. 4 is a characteristic diagram illustrating an example of a method for switching the fuels of the variable heat/power ratio cogeneration system according to the first embodiment of the invention. Fig. 5 is a characteristic diagram illustrating an example of a method for combusting a mixture of the normal fuel and the gasification gas in the variable heat/power ratio cogeneration system according to the first embodiment of the invention.

Upon start-up of the gas turbine 4, only the normal fuel system 202 illustrated in Fig. 1 is used, and the normal fuel is combusted to activate the gas turbine 4. This prevents the gasification gas from being explosively combusted by hydrogen contained in the gasification gas. Upon stopping of the gas turbine 4, only the normal fuel system 202 illustrated in Fig. 1 is used, and the output and rotational speed of the gas turbine 4 are reduced. After that, the gas turbine 4 is stopped. This prevents the carbon monoxide contained in the gasification gas from remaining in the gas turbine 4 after the stop of the gas turbine 4. As a result, it is possible to prevent an operator and the like from being intoxicated by the carbon monoxide.

A method for increasing the amount of power to be generated after the start-up of the gas turbine 4 is described with reference to Fig. 4. In Fig. 4, the abscissa indicates the amount of power to be generated, and the ordinate indicates the flow rates of the gasification gas fuel and normal fuel. As illustrated in Fig. 4, in a range in which the amount of power to be generated is small, a demand to increase and reduce the amount of power to be generated is met by increasing and reducing the amount of the normal fuel to be used for the start-up. When the amount of power to be generated reaches a value indicated by "the start of the fuel switching" in Fig. 4 and is further increased, the normal fuel starts to be switched to the gasification gas. When the amount of power to be generated reaches the value indicated by "the start of the fuel switching" and does not reach a value indicated by "the end of the fuel switching", the flow rate of the normal fuel is reduced at a constant rate and the flow rate of the gasification gas is increased at a constant rate. When the amount of power to be generated reaches the value indicated by "the end of the fuel switching", only the gasification gas is used. In a range in which the amount of power to be generated is larger than the value indicated by "the end of the fuel switching", a demand to increase and reduce the amount of power to be generated is met by increasing and reducing only the flow rate of the gasification gas fuel.

Next, a method for combusting the mixture of the normal fuel and the gasification gas is described with reference to Fig. 5. In Fig. 5, the abscissa indicates the amount of power to be generated, and the ordinate indicates the flow rates of the gasification gas fuel and normal fuel. The method illustrated in Fig. 5 for combusting the mixture is performed in the case where the flow rate or heating value of the gasification gas is insufficient in the range in which the amount of power to be generated is larger than the value indicated by "the end of the fuel switching". In this case, a part of the normal fuel is left and the normal fuel and the gasification gas are mixed and combusted. In this case, the heating value and flow rate of the mixture (fuel) vary depending on the ratio (mixed combustion ratio) of the flow rate of the gasification gas to the flow rate of the normal fuel.

An upper limit of the flow rate of the fuel can be controlled by causing the thermometer 14 to detect the temperature of the gas turbine exhaust 106 illustrated in Fig. 1 and controlling the flow rate of the fuel while preventing the temperature of the gas turbine exhaust 106 from exceeding a predetermined temperature (control of the temperature of the exhaust gas).

Next, control of the flow rate of steam in the variable heat/power ratio cogeneration system according to the first embodiment of the invention is described. In the first embodiment, the control of the flow rate of the steam includes heat prioritized steam flow rate control and electricity prioritized steam flow rate control.

First, the heat prioritized steam flow rate control is described. In the variable heat/power ratio cogeneration system (illustrated in Fig. 1) according to the first embodiment of the invention, in order for the generator 20 to increase the amount of power to be generated on the basis of a demanded command value of electricity, the flow rate of the gasification gas fuel is increased by increasing the opening degree of the gasification gas flow rate control valve 211, the amount of the steam generated by the heat recovery steam generator 5 is increased and steam pressure detected by the steam pressure indicator 12 is increased. If the pressure of the steam exceeds a predetermined threshold, the process steam flow rate control valve 313 is opened and the steam starts to be supplied to the steam consumption facility 6. When the steam starts to be supplied, the steam pressure detected by the steam pressure indicator 12 is reduced.

To maintain the steam pressure detected by the steam pressure indicator 12 at a predetermined value, it is necessary that a gas turbine load command value or a rotational speed command value be increased and the opening degree of the gasification gas flow rate control valve 211 be increased. In this manner, the heat prioritized steam flow rate control is performed to control the flow rate of the gasification gas fuel while maintaining the steam pressure detected by the steam pressure indicator 12 at the predetermined value. In the heat prioritized steam flow rate control, the amount of power output by the generator 20 varies depending on a variation in the steam pressure. Thus, the difference between the amount of power output by the generator 20 and the demanded command value of electricity needs to be adjusted by supply (so-called power purchase) of an electricity system or the like.

If the generator 20 is not connected to the electricity system, and control of electricity is prioritized over control of heat generated by the variable heat/power ratio cogeneration system, the electricity prioritized steam flow rate control is performed. In the variable heat/power ratio cogeneration system according to the first embodiment of the invention, when the generator 20 increases the amount of power to be generated on the basis of a demanded command value of electricity, and the flow rate of the gasification gas fuel is increased by increasing the opening degree of the gasification gas flow rate control valve 211, the amount of steam generated by the heat recovery steam generator 5 is increased and the steam pressure detected by the steam pressure indicator 12 is increased accordingly.

When the pressure of the steam is increased, the maximum amount of steam that can be used by the steam consumption facility 6 is also increased. When extra steam is generated by increasing the amount of steam to be generated or reducing the amount of steam to be consumed by the steam consumption facility 6 and the steam pressure detected by the steam pressure indicator 12 is further increased, the steam flow rate control valve 311 of the first steam injection system 301 is opened and the first steam 321 starts to be injected. The opening degree of the first steam flow rate control valve 311 is controlled so that the pressure of the steam is maintained at an almost constant value.

The first steam injection system 301 sprays the first steam 321 at the upstream-side edge of the combustor 2. The sprayed first steam 321 flows into the combustor liner 10 while being mixed with the combustion air 104. The first steam 321 and the fuel sprayed by the combustor nozzle 9 are combusted. In this case, since the heat capacity of the combustion air 104 is increased by the amount of the mixed first steam 321, the temperature of the flame is reduced and the amount of generated NOx is reduced.

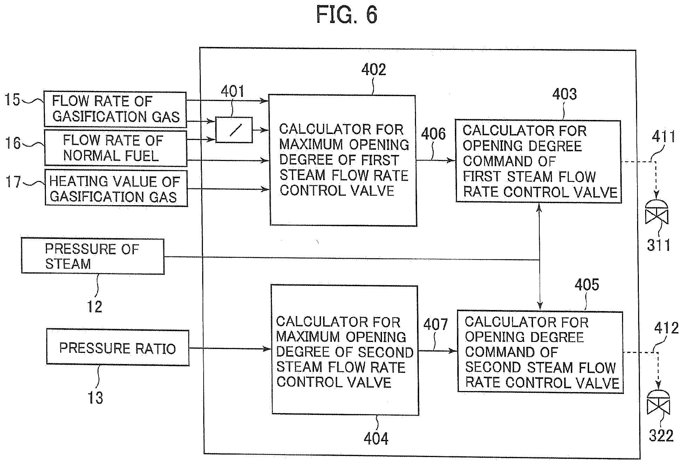

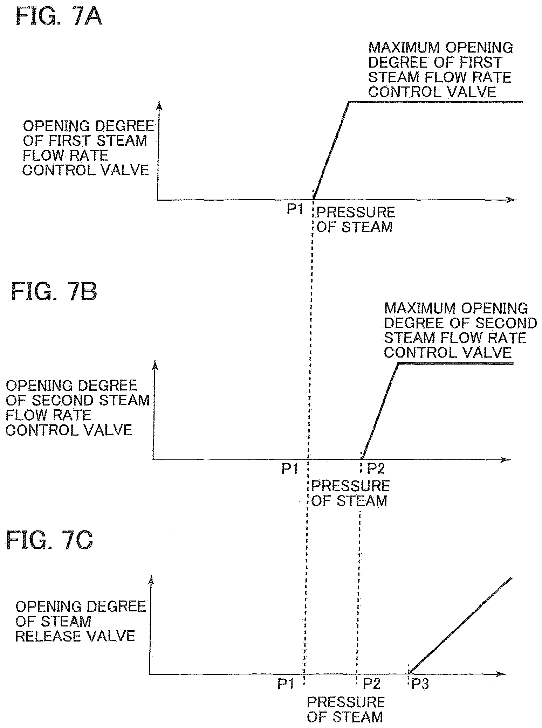

Next, the controller 400 that controls the flow rate of the steam and operations thereof are described with reference to Figs. 6 and 7. Fig. 6 is a block diagram illustrating an example of the configuration of the controller 400 that constitutes a part of the variable heat/power ratio cogeneration system according to the first embodiment of the invention. Figs. 7A to 7C are characteristic diagrams illustrating examples of the control of the flow rate of the steam in the variable heat/power ratio cogeneration system according to the first embodiment of the invention. Reference numerals that are illustrated in Fig. 6 and the same as those illustrated in Figs. 1 to 3 indicate the same parts as those illustrated in Figs. 1 to 3, and a detailed description thereof is omitted.

As illustrated in Fig. 6, the controller 400 includes a divider 401, a calculator 402 for maximum opening degrees of the first steam flow rate control valve, a calculator 403 for opening degree commands of the first steam flow rate control valve, a calculator 404 for maximum opening degrees of the second steam flow rate control valve, and a calculator 405 for opening degree commands of the second steam flow rate control valve. In addition, the controller 400 receives a signal detected by the gasification gas flowmeter 15 and indicating the flow rate of the gasification gas, a signal detected by the normal flowmeter 16 and indicating the flow rate of the normal fuel, a signal detected by the heating value measurer 17 and indicating the heating value of the gasification gas, a signal detected by the steam pressure indicator 12 and indicating the pressure of the steam, and a signal detected by the pressure ratio detector 13 and indicating the differential pressure (pressure ratio) between the pressure of the suctioned air and the pressure of air to be discharged. The controller 400 outputs an opening degree command 411 to the first steam flow rate control valve 311. The controller 400 outputs an opening degree command 412 to the second steam flow rate control valve 312.

The divider 401 receives the signal indicating the flow rate of the gasification gas and the signal indicating the flow rate of the normal fuel to calculate the ratio (mixed combustion ratio) of the flow rate of the gasification gas to the flow rate of the normal fuel. The divider 401 outputs a signal indicating the calculated mixed combustion ratio to the first steam flow rate control valve maximum opening degree calculator 402.

The first steam flow rate control valve maximum opening degree calculator 402 receives the signal indicating the flow rate of the gasification gas, the signal indicating the flow rate of the normal fuel, the signal indicating the heating value of the gasification gas, and the signal output from the divider 401 and indicating the mixed combustion ratio and calculates the maximum opening degree of the first steam flow rate control valve 311 from the four received signals. Specifically, the first steam flow rate control valve maximum opening degree calculator 402 calculates the maximum opening degree so that the higher the flow rate of the fuel, or the smaller the mixed combustion ratio of the gasification gas to the normal fuel, or the larger the heating value of the gasification gas, the larger the maximum opening degree. A signal 406 that indicates the calculated maximum opening degree is input to the first steam flow rate control valve opening degree command calculator 403.

The first steam flow rate control valve opening degree command calculator 403 receives the signal 406 output from the first steam flow rate control valve maximum opening degree calculator 402 and indicating the maximum opening degree and the signal indicating the pressure of the steam, calculates an opening degree command 411 of the first steam flow rate control valve 311, and outputs the opening degree command 411 to the first steam flow rate control valve 311.

The second steam flow rate control valve maximum opening degree calculator 404 receives the signal indicating the differential pressure (pressure ratio) between the pressure of the suctioned air and the pressure of air to be discharged and calculates the maximum opening degree of the second steam flow rate control valve 312 from the signal indicating the pressure ratio. Specifically, the calculator 404 calculates the maximum opening degree so that the higher the pressure ratio, the smaller the maximum opening degree. A signal 407 that indicates the calculated maximum opening degree is input to the second steam flow rate control valve opening degree command calculator 405.

The second steam flow rate control valve opening degree command calculator 405 receives the signal 407 output from the second steam flow rate control valve maximum opening degree calculator 404 and indicating the maximum opening degree and the signal indicating the pressure of the steam, calculates an opening degree command 412 of the second steam flow rate control valve 312, and outputs the opening degree command 412 to the second steam flow rate control valve 312.

Next, operations of the controller 400 are described with reference to Figs. 7A to 7C. Figs. 7A to 7C are the characteristic diagrams indicating the examples of the control of the flow rate of the steam and illustrate examples of operations for the control of the flow rate of the steam.

In Figs. 7A to 7C, the abscissa indicates the signal detected by the steam pressure indicator 12 and indicating the pressure of the steam. In Figs. 7A to 7C, from above, the ordinates indicate the opening degree of the first steam flow rate control valve 311, the opening degree of the second steam flow rate control valve 312, and the opening degree of the steam release valve 314. Steam pressure P1 indicates the pressure of the first steam 321 when the first steam 321 starts to be injected. Steam pressure P2 indicates the pressure of the second steam 322 when the second steam 322 starts to be injected. Steam pressure P3 indicates the pressure of the steam when the steam starts to be released.

In the electricity prioritized steam flow rate control, the generator 20 increases the amount of power to be generated on the basis of the demanded command value of electricity, and the steam generated by the heat recovery steam generator 5 is used by the steam consumption facility 6. In this case, when extra steam is generated by an increase in the amount of generated steam or a reduction in the amount of steam consumed by the steam consumption facility 6, and the steam pressure detected by the steam pressure indicator 12 exceeds the set steam pressure P1, the first steam flow rate control valve 311 is opened and starts to inject the first steam 321 as illustrated in Fig. 7A. The opening degree of the first steam flow rate control valve 311 is controlled so that the pressure of the first steam 321 is maintained at an almost constant level, for example. As described above with reference to Fig. 6, the opening degree command 411 (of the first steam flow rate control valve 311) calculated by the first steam flow rate control valve opening degree command calculator 403 of the controller 400 is output to the first steam flow rate control valve 311. The opening degree of the first steam flow rate control valve 311 is changed basically as illustrated in Fig. 7A.

Next, control performed after the opening degree of the first steam flow rate control valve 311 of the first steam injection system 301 reaches an upper limit is described. If the demanded command value of electricity is increased after the opening degree of the first steam flow rate control valve 311 reaches the upper limit, and the steam pressure detected by the steam pressure indicator 12 exceeds the set steam pressure P2, the second steam flow rate control valve 312 is opened and starts to inject the second steam 322. The opening degree of the second steam flow rate control valve 312 is controlled so that the pressure of the second steam 322 is maintained at an almost constant level, for example. As described above with reference to Fig. 6, the opening degree command 412 (of the second steam flow rate control valve 312) calculated by the second steam flow rate control valve opening degree command calculator 405 of the controller 400 is output to the second steam flow rate control valve 312. The opening degree of the second steam flow rate control valve 312 is changed basically as illustrated in Fig. 7B.

After that, when the demanded command value of electricity is increased and the steam pressure detected by the steam pressure indicator 12 exceeds the set steam pressure P3, the steam release valve 314 illustrated in Fig. 1 can be opened, introduce the steam to an exhaust tower, and control the pressure of the steam. The opening degree of the steam release valve 314 is changed basically as illustrated in Fig. 7C.

As described above, in the present embodiment, when the amount of steam necessary for the steam consumption facility 6 is changed, or a variable heat/power ratio operation is performed by changing the amount of steam to be injected into the gas turbine 4, the combustion can be performed in a stable manner and the amount of the NOx emission can be suppressed to the minimum level.

Next, the case where the mixed combustion ratio that is the ratio of the flow rate of the gasification gas to the flow rate of the normal fuel is changed is described.

For example, when the mixed combustion ratio of the gasification gas to the normal fuel is reduced, the heating value of the fuel after the mixing increases. Thus, in order to maintain the output of the generator 20 of the gas turbine 4 or the pressure of the steam generated by the heat recovery steam generator 5 at a constant level, the flow rate of the fuel needs to be reduced, and thus the amount of the first steam 321 to be injected needs to be reduced. In this case, the temperature of the flame is increased by the reduction in the amount of the injected steam, unlike the case where only the flow rate of the fuel is reduced and the heating value of the fuel is constant when the normal fuel is used. Although the stability of the flame is improved, the amount of the NOx to be generated may increase.

In the present embodiment, since the mixed combustion ratio of the gasification gas is detected by the divider 401 (illustrated in Fig. 6) and the first steam flow rate control valve maximum opening degree calculator 402 performs the calculation that causes the maximum opening degree to be large, the amount of the steam to be injected is increased. As a result, low-NOx performance can be maintained. When the measurement signal that indicates the differential pressure (pressure ratio) between the pressure of the suctioned air and the pressure of the air to be discharged exceeds a set value, the second steam flow rate control valve maximum opening degree calculator 404 performs the calculation that causes the maximum opening degree to be reduced. Thus, the opening degree of the second steam flow rate control valve 312 is reduced, and the pressure ratio can be maintained at its upper limit.

When the mixed combustion ratio of the gasification gas is increased, the flow rate of the fuel needs to be increased in order to maintain the output of the generator 20 of the gas turbine 4 or the pressure of the steam generated by the heat recovery steam generator 5 at a constant level. Although the amount of the first steam 321 needs to be increased due to the increase in the flow rate of the fuel, the controller 400 performs the control on the basis of the mixed combustion ratio in the aforementioned manner. Thus, the increase in the amount of the first steam 321 can be suppressed, and the stability of the combustion can be maintained.

Next, the case where the heating value of the gasification gas is changed is described.

For example, when the heating value of the gasification gas is reduced, the flow rate of the fuel needs to be increased in order to maintain the output of the generator 20 of the gas turbine 4 or the pressure of the steam generated by the heat recovery steam generator 5 at a constant level, and the amount of the first steam 321 to be injected is increased due to the increase in the flow rate of the fuel. In this case, the temperature of the flame is reduced by the increase in the amount of the injected steam, unlike the case where only the flow rate is increased and the heating value of the fuel is constant when the normal fuel is used. Although the reduction in the temperature of the flame contributes to a reduction in the amount of the NOx, the stability of the combustion may be reduced.

In the present embodiment, as illustrated in Fig. 6, since the first steam flow rate control valve maximum opening degree calculator 402 that receives the signal detected by the heating value measurer 17 and indicating the heating value of the gasification gas performs the calculation to reduce the maximum opening degree, the amount of the steam to be injected is suppressed. As a result, a stable combustion state can be maintained.

When the heating value of the gasification gas is increased, the flow rate of the fuel needs to be reduced in order to maintain the output of the generator 20 of the gas turbine 4 or the pressure of the steam generated by the heat recovery steam generator 5 at a constant level. Although the first steam injection system 301 tries to reduce the amount of the first steam 321 to be injected due to the reduction in the flow rate of the fuel, the controller 400 performs the control on the basis of the heating value in the aforementioned manner. Thus, the reduction in the amount of the steam to be injected is suppressed, and a low-NOx combustion state can be maintained. In addition, as described above, when the measurement signal that indicates the differential pressure (pressure ratio) between the pressure of the suctioned air and the pressure of the air to be discharged exceeds the set value, the second steam flow rate control valve maximum opening degree calculator 404 of the controller 400 performs the calculation that causes the maximum opening degree to be reduced. Thus, the opening degree of the second steam flow rate control valve 312 is reduced, and the pressure ratio can be maintained at its upper limit.

In the variable heat/power ratio cogeneration system according to the first embodiment of the invention, even when the ratio of the amount of the gasification gas used to the amount of the normal fuel (such as natural gas or light fuel oil) is changed, or the composition of the gasification gas are changed, or the amount of the steam used is changed, the stability of the combustion of the gas turbine combustor 2 can be ensured and the amount of the NOx emission can be suppressed to the minimum level.

In the variable heat/power ratio cogeneration system according to the first embodiment of the invention, when the amount of the steam to be consumed is small, the amount of power to be generated is increased by injecting extra steam into the combustor 2 while the amount of the NOx emission is suppressed. The variable heat/power ratio cogeneration system according to the first embodiment uses the gasification gas fuel such as coal gasification gas or biomass gasification gas and uses the normal fuel such as natural gas or light fuel oil in order to activate and stop the gas turbine 4 and support the combustion. When the amount of the fuel to be consumed, the amount of the steam to be used, the ratio of the gasification gas, or the composition of the gasification gas is changed, the amount of the steam to be injected into the combustor 2 can be controlled, the stable combustion can be maintained, and the amount of the NOx emission can be suppressed to the minimum level.

### Second Embodiment

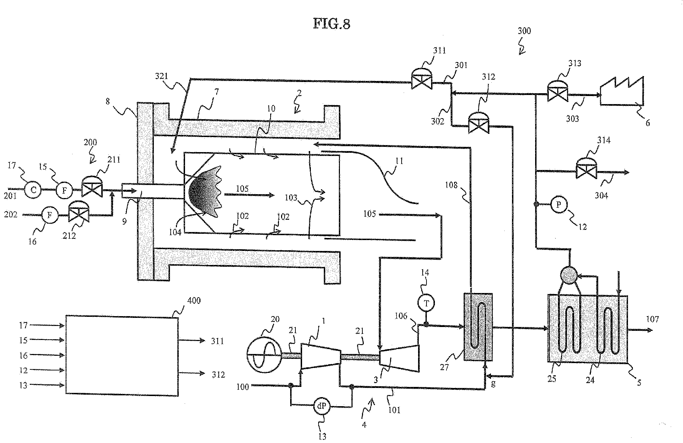

The variable heat/power ratio cogeneration system according to the second embodiment of the invention is described with reference to Fig. 8. Fig. 8 is a system flow diagram illustrating an example of the configuration of the variable heat/power ratio cogeneration system according to the second embodiment of the invention. Reference numerals that are illustrated in Fig. 8 and the same as those illustrated in Figs. 1 to 3 and 6 indicate the same parts as those illustrated in Figs. 1 to 3 and 6, and a detailed description thereof is omitted.

The variable heat/power ratio cogeneration system according to the second embodiment of the invention includes the same devices as the first embodiment, but is different in the following configurations from the first embodiment. In the second embodiment, a recuperator 27 that uses, as a heat source, the low-pressure gas turbine exhaust 106 output from the turbine 3 is arranged on the upstream side of the heat recovery steam generator 5. After the air 101 compressed by the compressor 1 is extracted from the gas turbine 4, the compressed air 101 flows into the recuperator 27, exchanges heat with the gas turbine exhaust 106, and becomes high-temperature air 108. Since the recuperator 27 uses heat of the gas turbine exhaust 106 to heat the compressed air 101, the fuel necessary for the combustor 2 can be saved and the efficiency can be improved.

In the second embodiment, the second steam injection system 302 injects the steam through the second steam flow rate control valve 312 into a space in which the compressed air 101 exists on the upstream side (location indicated by a symbol "g" in Fig. 8) of the recuperator 27.

The high-temperature air 108 heated by the recuperator 27 flows into the combustor casing 7 and is used as the liner cooling air 102, the dilution air 103, and the combustion air 104 in the same manner as the first embodiment. Most part of the high-temperature air 108 does not flow into the flame zone and joins the combustion gas 105 after the combustion as the liner cooling air 102 and the dilution air 103. Thus, the steam can be injected into the gas turbine 4 without a reduction in the stability of the flame in the same manner as the first embodiment.

The variable heat/power ratio cogeneration system according to the second embodiment of the invention can obtain the same effects as the first embodiment.

In the variable heat/power ratio cogeneration system according to the second embodiment of the invention, the exhaust heat of the gas turbine exhaust 106 can be recovered by the compressed air 101 as well as the steam. Thus, the variable heat/power ratio cogeneration system according to the second embodiment of the invention is suitable for the case where the maximum amount of steam to be generated is small or the case where the amount of steam required by the steam consumption facility 6 is small and a demanded amount of electricity is large or the heat-to-power ratio is low.

## Claims

1. A variable heat/power ratio cogeneration system comprising:
a gas turbine (4) that uses gasification gas obtained by gasifying a solid or liquid fuel and a normal fuel that is natural gas, oil gas, or light fuel oil, the normal fuel being used as an alternative or auxiliary fuel when the gas turbine (4) is start-up and stopped or when the amount of the gasification gas to be supplied is small;
a combustor (2) that combusts the gasification gas and the normal fuel to generate combustion gas;
a heat recovery steam generator (5) that uses exhaust gas of the gas turbine (4) to generate steam;
a process system that supplies the generated steam to a steam consumption facility (6);
a steam system that injects extra steam into the gas turbine (4),
**characterized by**
the steam system including
a first steam system (301) that injects the extra steam on the upstream side of a flame zone with respect to the flow of the combustion gas in the combustor (2) and
a second steam system (302) that is branched from the first steam system (301) and injects the extra steam on the downstream side of the flame zone with respect to the flow of the combustion gas in the combustor (2);
a first steam flow rate control valve (311) that is arranged in the first steam system (301) and capable of controlling the flow rate of the steam to be injected by the first steam system (301);
a second steam flow rate control valve (312) that is arranged in the second steam system (302) and capable of controlling the flow rate of the steam to be injected by the second steam system (302);
a gasification gas flow rate detector (15) that detects the flow rate of the gasification gas;
a normal fuel flow rate detector (16) that detects the flow rate of the normal fuel;
a demanded steam amount detector that detects a demanded amount of steam necessary for the steam consumption facility; and
a controller (400) that acquires the flow rate of the gasification gas detected by the gasification gas flow rate detector (15) and the flow rate of the normal fuel detected by the normal fuel flow rate detector (16) to control the first steam flow rate control valve (311) on the basis of signals indicating the acquired flow rates, the controller (400) further acquiring the demanded steam amount detected by the demanded steam amount detector and necessary for the steam consumption facility to control the second steam flow rate control valve (312) on the basis of a signal indicating the demanded steam amount.

2. The variable heat/power ratio cogeneration system according to claim 1,
wherein the combustor (2) has a part in which the extra steam is injected by the first steam system (301), the part corresponding to a position at which most part of the sprayed steam is mixed with combustion air or the fuel on the upstream side of the flame zone with respect to the flow of the combustion gas.

3. The variable heat/power ratio cogeneration system according to claim 1 or 2,
wherein the combustor (2) has a part in which the extra steam is injected by the second steam system (302), the part corresponding to a position at which most part of the sprayed steam is mixed with the combustion gas after the combustion on the downstream side of the flame zone with respect to the flow of the combustion gas.

4. The variable heat/power ratio cogeneration system according to any one of claims 1 to 3,
wherein the demanded steam amount detector is a steam pressure indicator (12).

5. The variable heat/power ratio cogeneration system according to any one of claims 1 to 4,
wherein the controller (400) includes:
a divider (401) for acquiring the flow rate detected by the gasification gas flow rate detector (15) and the flow rate detected by the normal fuel flow rate detector (16) to calculate a mixed combustion ratio of the flow rate of the gasification gas to the flow rate of the normal fuel; and
a calculator for calculating, on the basis of a signal indicating the mixed combustion ratio, an opening degree of the first steam flow rate control valve to control the first steam flow rate control valve (311).

6. The variable heat/power ratio cogeneration system according to any one of claims 1 to 5, further comprising
a heating value detector (17) that detects the heating value of the gasification gas,
wherein the controller (400) acquires the heating value of the gasification gas detected by the heating value detector (17), calculates the opening degree of the first steam flow rate control valve on the basis of a signal indicating the heating value of the gasification gas, and controls the first steam flow rate control valve (311).

## Patentansprüche

1. Kraft/Wärme-Kopplungssystem mit veränderbarem Wärme/Leistungs-Verhältnis, das Folgendes umfasst:
eine Gasturbine (4), die Vergasungsgas, das durch Vergasen eines festen oder flüssigen Brennstoffs und eines normalen Brennstoffs, der Erdgas, Ölgas oder leichtes Heizöl ist, erhalten wird, verwendet, wobei der normale Brennstoff als ein alternativer Brennstoff oder ein Hilfsbrennstoff verwendet wird, wenn die Gasturbine (4) gestartet oder gestoppt wird oder wenn die Menge des Verbrennungsgases, die zugeführt werden soll, klein ist;
eine Verbrennungsvorrichtung (2), die das Vergasungsgas und den normalen Brennstoff verbrennt, um Verbrennungsgas zu erzeugen;
einen Wärmerückgewinnungsdampfgenerator (5), der Abgas der Gasturbine (4) verwendet, um Dampf zu erzeugen;
ein Prozesssystem, das den erzeugten Dampf einer Dampfverbrauchsanlage (6) zuführt;
ein Dampfsystem, das zusätzlichen Dampf in die Gasturbine (4) einspeist,
wobei das Dampfsystem durch Folgendes gekennzeichnet ist:
ein erstes Dampfsystem (301), das den zusätzlichen Dampf auf der stromaufwärts gelegenen Seite einer Flammenzone in Bezug auf den Durchfluss des Verbrennungsgases in die Verbrennungsvorrichtung (2) einspeist und
ein zweites Dampfsystem (302), das vom ersten Dampfsystem (301) abzweigt und den zusätzlichen Dampf auf der stromabwärts gelegenen Seite der Flammenzone in Bezug auf den Durchfluss des Verbrennungsgases in die Verbrennungsvorrichtung (2) einspeist;
ein erstes Dampfdurchflussmengensteuerventil (311), das im ersten Dampfsystem (301) angeordnet ist und die Durchflussmenge des Dampfs, der durch das erste Dampfsystem (301) eingespritzt werden soll, steuert;
ein zweites Dampfdurchflussmengensteuerventil (312), das im zweiten Dampfsystem (302) angeordnet ist und die Durchflussmenge des Dampfs, der durch das zweite Dampfsystem (302) eingespritzt werde soll, steuern kann;
einen Durchflussmengendetektor (15) für Vergasungsgas, der die Durchflussmenge des Vergasungsgases detektiert;
einen Durchflussmengendetektor (16) für einen normalen Brennstoff, der die Durchflussmenge des normalen Brennstoffs detektiert;
einen Detektor für eine angeforderte Dampfmenge, der eine angeforderte Menge des Dampfs detektiert, der für die Dampfverbrauchsanlage nötig ist; und
eine Steuereinheit (400), die die Durchflussmenge des Vergasungsgases, die durch den Durchflussmengendetektor (15) für Vergasungsgas detektiert worden ist, und die Durchflussmenge des normalen Brennstoffs, die durch den Durchflussmengendetektor (16) für einen normalen Brennstoff detektiert worden ist, erfasst, um das erste Dampfdurchflussmengensteuerventil (311) auf der Grundlage von Signalen, die die erfassten Durchflussmengen anzeigen, zu steuern, wobei die Steuereinheit (400) ferner die angeforderte Dampfmenge, die durch den Detektor für eine angeforderte Dampfmenge detektiert worden ist und für die Dampfverbrauchsanlage erforderlich ist, erfasst, um das zweite Dampfdurchflussmengensteuerventil (312) auf der Grundlage eines Signals, das die angeforderte Dampfmenge anzeigt, zu steuern.

2. Kraft/Wärme-Kopplungssystem mit veränderbarem Wärme/Leistungs-Verhältnis nach Anspruch 1, wobei
die Verbrennungsvorrichtung (2) einen Teil besitzt, in dem der zusätzliche Dampf durch das erste Dampfsystem (301) eingespeist wird, und der Teil einer Position entspricht, bei der der größte Teil des versprühten Dampfs mit der Verbrennungsluft oder dem Brennstoff auf der stromaufwärts gelegenen Seite der Flammenzone in Bezug auf den Durchfluss des Verbrennungsgases gemischt ist.

3. Kraft/Wärme-Kopplungssystem mit veränderbarem Wärme/Leistungs-Verhältnis nach Anspruch 1 oder 2, wobei
die Verbrennungsvorrichtung (2) einen Teil besitzt, in dem der zusätzliche Dampf durch das zweite Dampfsystem (302) eingespeist wird, wobei der Teil einer Position entspricht, bei der der größte Teil des versprühten Dampfs mit dem Verbrennungsgas gemischt ist, nachdem die Verbrennung auf der stromabwärts gelegenen Seite der Flammenzone in Bezug auf den Durchfluss des Verbrennungsgases gemischt ist.

4. Kraft/Wärme-Kopplungssystem mit veränderbarem Wärme/Leistungs-Verhältnis nach einem der Ansprüche 1 bis 3, wobei
der Detektor für eine angeforderte Dampfmenge ein Dampfdruckindikator (12) ist.

5. Kraft/Wärme-Kopplungssystem mit veränderbarem Wärme/Leistungs-Verhältnis nach einem der Ansprüche 1 bis 4, wobei
die Steuereinheit (400) Folgendes enthält:
einen Teiler (401), um die Durchflussmenge, die durch den Durchflussmengendetektor (15) für Vergasungsgas detektiert worden ist, und die Durchflussmenge, die durch den Durchflussmengendetektor (16) für einen normalen Brennstoff detektiert worden ist, zu erfassen, um ein gemischtes Verbrennungsverhältnis der Durchflussmenge des Verbrennungsgases zu der Durchflussmenge des normalen Brennstoffs zu berechnen; und
einen Rechner zum Berechnen eines Öffnungsgrads des ersten Dampfdurchflussmengensteuerventils auf der Grundlage eines Signals, das das gemischte Verbrennungsverhältnis anzeigt, um das erste Dampfdurchflussmengensteuerventil (311) zu steuern.

6. Kraft/Wärme-Kopplungssystem mit veränderbarem Wärme/Leistungs-Verhältnis nach einem der Ansprüche 1 bis 5, das ferner Folgendes umfasst:
einen Heizwertdetektor (17), der den Heizwert des Vergasungsgases detektiert, wobei
die Steuereinheit (400) den Heizwert des Vergasungsgases, der durch den Heizwertdetektor (17) detektiert wurde, erfasst, den Öffnungsgrad des ersten Dampfdurchflussmengensteuerventils auf der Grundlage eines Signals, das den Heizwert des Vergasungsgases anzeigt, berechnet und das erste Dampfdurchflussmengensteuerventil (311) steuert.

## Revendications

1. Système de cogénération de chaleur/puissance à rapport variable comprenant :
une turbine à gaz (4) qui utilise un gaz de gazéification obtenu en gazéifiant un combustible solide ou liquide et un combustible normal qui est du gaz naturel, du gaz de pétrole, ou du pétrole léger, le combustible normal étant utilisé à titre de combustible alternatif ou auxiliaire quand la turbine à gaz (4) est démarrée et arrêtée ou quand la quantité de gaz de gazéification à alimenter est faible ;
une unité de combustion (2) qui fait brûler le gaz de gazéification et le combustible normal pour générer un gaz de combustion ;
un générateur de vapeur à récupération de chaleur (5) qui utilise les gaz d'échappement de la turbine à gaz (4) pour générer de la vapeur ;
un système de traitement qui alimente la vapeur générée à une installation de consommation de vapeur (6) ;
un système de vapeur qui injecte une vapeur supplémentaire dans la turbine à gaz (4),
**caractérisé en ce que** le système de vapeur inclut
un premier système de vapeur (301) qui injecte la vapeur supplémentaire sur le côté amont d'une zone de flamme par rapport à l'écoulement du gaz de combustion dans l'unité de combustion (2) et
un second système de vapeur (302) qui est ramifié depuis le premier système de vapeur (301) et qui injecte la vapeur supplémentaire sur le côté aval de la zone de flamme par rapport à l'écoulement du gaz de combustion dans l'unité de combustion (2) ;
une première vanne de commande de débit de vapeur (311) qui est agencée dans le premier système de vapeur (301) et qui est capable de commander le débit de la vapeur injectée par le premier système de vapeur (301) ;
une seconde valve de commande de débit de vapeur (312) qui est agencée dans le second système de vapeur (302) et qui est capable de commander le débit de la vapeur injectée par le second système de vapeur (302) ;
un détecteur de débit de gaz de gazéification (15) qui détecte le débit du gaz de gazéification ;
un détecteur de débit de combustible normal (16) qui détecte le débit du combustible normal ;
un détecteur de quantité de vapeur demandée qui détecte une quantité demandée de vapeur nécessaire pour l'installation de consommation de vapeur ; et
un contrôleur (400) qui acquiert le débit du gaz de gazéification détecté par le détecteur de débit de gaz de gazéification (15) et le débit du combustible normal détecté par le détecteur de débit de combustible normal (16) pour commander la première valve de commande de débit de vapeur (311) sur la base de signaux indiquant les débits acquis, le contrôleur (400) acquérant en outre la quantité de vapeur demandée détectée par le détecteur de quantité de vapeur demandée et nécessaire pour l'installation de consommation de vapeur afin de commander la seconde valve de commande de débit de vapeur (312) sur la base d'un signal indiquant la quantité de vapeur demandée.

2. Système de cogénération chaleur/puissance à rapport variable selon la revendication 1,
dans lequel l'unité de combustion (2) a une partie dans laquelle la vapeur supplémentaire est injectée par le premier système de vapeur (301), la partie correspondant à une position à laquelle la majeure partie de vapeur pulvérisée est mélangée avec de l'air de combustion ou avec le combustible sur le côté amont de la zone de flamme par rapport à l'écoulement du gaz de combustion.

3. Système de cogénération chaleur/puissance à rapport variable selon la revendication 1 ou 2,
dans lequel l'unité de combustion (2) a une partie dans laquelle la vapeur supplémentaire est injectée par le second système de vapeur (302), la partie correspondant à une position à laquelle une majeure partie de la vapeur pulvérisée est mélangée avec le gaz de combustion après la combustion sur le côté aval de la zone de flamme par rapport à l'écoulement du gaz de combustion.

4. Système de cogénération chaleur/puissance à rapport variable selon l'une quelconque des revendications 1 à 3,
dans lequel le détecteur de quantité de vapeur demandée est un indicateur de pression de vapeur (12).

5. Système de cogénération chaleur/puissance à rapport variable selon l'une quelconque des revendications 1 à 4,
dans lequel le contrôleur (400) inclut :
un diviseur (401) pour acquérir le débit détecté par le détecteur de débit de gaz de gazéification (15) et le débit détecté par le détecteur de débit de combustible normal (16) afin de calculer un rapport de combustion mixte du débit de gaz de gazéification sur le débit du combustible normal ; et
un calculateur pour calculer, sur la base d'un signal indiquant le rapport de combustion mixte, un degré d'ouverture de la première valve de commande de débit de vapeur afin de commander la première valve de commande de débit de vapeur (311).

6. Système de cogénération chaleur/puissance à rapport variable selon l'une quelconque des revendications 1 à 5, comprenant en outre
un détecteur de valeur de chauffage (17) qui détecte la valeur de chauffage du gaz de gazéification,
dans lequel le contrôleur (400) acquiert la valeur de chauffage du gaz de gazéification détecté par le détecteur de valeur de chauffage (17), calcule le degré d'ouverture de la première valve de commande de débit de vapeur sur la base d'un signal indiquant la valeur de chauffage du gaz de gazéification, et commande la première valve de commande de débit de vapeur (311).
